# EUROPÄISCHE PATENTSCHRIFT

(11) **EP 2 769 941 B1**
(45) Veröffentlichungstag und Bekanntmachung des Hinweises auf die Patenterteilung: **14.01.2015**
(21) Anmeldenummer: 13155971.8
(22) Anmeldetag: 20.02.2013
(51) Int. Cl.: B65G 47/86, B67C 3/24

(54) **Greifarm für Behälter und Verfahren zum Herstellen solches Greifarms**
Gripper arm for containers and method for manufacturing this gripper arm
Bras de préhension pour récipients ainsi que le procédé pour fabriquer tel bras de préhension

(43) Veröffentlichungstag der Anmeldung: 27.08.2014
(73) Patentinhaber: Tyrolon-Schulnig GmbH, 6395 Hochfilzen (AT)
(72) Erfinder: Schulnig, Elmar, Ludwig, 6391 Fieberbrunn (AT)
(74) Vertreter: Rupprecht, Kay

(56) Entgegenhaltungen:
- EP-A1- 0 939 044
- EP-A1- 2 343 255
- EP-A1- 2 548 824
- EP-A2- 2 143 674
- EP-B1- 1 868 746
- DE-A1- 19 542 337
- DE-A1-102010 052 348
- DE-U1- 29 915 927

## Beschreibung

Die vorliegende Erfindung betrifft einen Greifarm und ein Verfahren zu dessen Herstellung für eine Vorrichtung zum Greifen, Halten und Führen von insbesondere flaschenartigen Behältern, welche zum Bewegen eines Greifabschnitts des Greifarms von einer Öffnungsstellung in eine Greifstellung einen drehbar gelagerten Steuernocken aufweist, mit einer Bohrung zur Lagerung eines Lagerbolzens zum schwenkbaren Befestigen des Greifarms in der Vorrichtung, mit einer Aufnahme für ein Öffnungsmittel zum Bewegen des Greifabschnitts des Greifarms von der Greifstellung in die Öffnungsstellung, und mit einem Federungsmittel zum Abfedern und Ausgleichen der durch den Steuernocken auf den Greifarm ausgeübten Kraft und/oder Auslenkung.

Ein solcher Greifarm ist dem Grunde nach aus dem Stand der Technik bekannt und wird bei der fließbandtechnischen Bearbeitung von Behältern verwendet. Unter dem Begriff "Behälter" sind nachstehend insbesondere, aber nicht ausschließlich flaschenartige Behälter zu verstehen, also zum Beispiel Getränkeflaschen aus Glas oder Kunststoff. Insbesondere beim Reinigen, Befüllen oder Verschließen werden die Behälter bei einer Eingangsstation mittels einer Greifvorrichtung mit mindestens einem Greifarmpaar ergriffen und zur nächsten Station im Prozess transportiert. Eine solche Vorrichtung ist beispielsweise in der Europäischen Patentanmeldeschrift EP 1 851 146 A1 offenbart. Die darin beschriebene Greifvorrichtung, dort "Klammergreifer" genannt, ist für ein Gefäßtransportsystem vorgesehen, wobei die Greifvorrichtung zwei Greifarme besitzt und zwischen einer Greifstellung und einer Öffnungsstellung wechseln kann. Für den Freigabe- bzw. Öffnungsprozess der Greifvorrichtung, d.h. für den Wechsel von der Greifstellung in die Öffnungsstellung der Greifarme, bedarf es eines Öffnungsmittels, z.B. in Form einer Spiralfeder oder eines sich abstoßenden Magnetpaars, das eine Kraft auf die zwei Greifarme ausübt und die Greifvorrichtung dadurch öffnet. Die Greifarme weisen normalerweise eine vordefinierte Ausgangsstellung auf, in die sie automatisch zurückkehren, wenn keine Kraft von einer Steuereinheit auf sie wirkt. Wie auch allgemein aus dem Stand der Technik bekannt, ist die Steuereinheit dabei als mechanisch wirkender Steuernocken ausgeführt, dessen Kraft und damit überwiegend auch die Auslenkung der Greifarme durch ein Federungsmittel in Form einer an jedem Greifarm befestigten Blattfeder ausgeglichen bzw. abgefedert wird. Das Federungsmittel hilft den Greifarmen dabei, Materialtoleranzen von zu greifenden Behältern oder durch einen schief stehenden Behälter hervorgerufene Abweichungen der Greifweite auszugleichen und damit ein sicheres Greifen zu ermöglichen und Beschädigungen des Behälters zu vermeiden.

Allerdings bringt der Betrieb einer derartigen Greifvorrichtung in einer nicht staubfreien Umgebung Hygieneprobleme mit sich, was sich insbesondere beim Einsatz in hygienesensitiven Bereichen wie dem Abfüllen von Getränken, Säften oder Babynahrung als nachteilig erweist. Denn die vorstehend beschriebenen Einzelteile eines aus dem Stand der Technik bekannten Greifarms, insbesondere die Spiralfeder und die Blattfeder mit ihren jeweiligen Befestigungsmitteln, sammeln Staub und/oder andere Verschmutzungen an, wodurch sich unerwünschte Keime festsetzen können.

EP 1 868 746 B1 beschreibt eine Klammer zum Halten von Gefäßen, insbesondere Flaschen, in Gefäßtransport- und -behandlungsmaschinen, mit mindestens zwei relativ zueinander beweglichen Klammerarmen. Der Klammerarm mit Greifarm und Gegenarm ist einstückig ausgebildet, wobei der Greifarm formstabil und der Gegenarm formelastisch ausgebildet ist.

Der Erfindung liegt die Aufgabe zugrunde, einen Greifarm anzugeben, der ohne weiteres ausreichend frei von Verschmutzungen und Keimen gehalten werden kann.

Die gestellte Aufgabe wird bei einem eingangs genannten Greifarm dadurch gelöst, dass das Federungsmittel einen integral in einem Endabschnitt des Greifarmkörpers gebildeten Federsteg aufweist. Die bei herkömmlichen Greifarmen regelmäßig zum Einsatz kommende separate Blattfeder entfällt somit, wodurch eine wesentlich hygienischere, einteilige Bauform des Greifarms ohne Verschmutzungen anziehende Querbohrungen erzielbar ist. Damit einher geht eine erhebliche Reduzierung der Wartungs- und Reparaturanfälligkeit, da die herkömmliche Blattfeder mit ihrer entsprechenden Verschraubung als separates Bauteil nicht mehr benötigt wird. Im Ergebnis werden die Ansatzflächen für Keime und Verschmutzungen wie z.B. Oberflächenvertiefungen erheblich reduziert.

In einer weiteren Ausführungsform ist bei dem Greifarm das Öffnungsmittel zum Bewegen des Greifabschnitts des Greifarms von der Greifstellung in die Öffnungsstellung ein Magnet. Dabei weist der Greifarm vorteilhafter Weise in einem Vorderabschnitt zwischen der Bohrung und dem Greifabschnitt als Aufnahme des Magneten ein Sackloch auf, in welches der Magnet beim Zusammenbau des Greifarms einsetzbar ist. Obwohl Greifarme mit Magneten als Öffnungsmittel aus dem oben erwähnten Stand der Technik bekannt sind, ersetzen sie die ebenfalls aus dem Stand der Technik bekannten Spiralfedern. Allerdings ist die Befestigung der Magnete bei den bekannten Greifarmen relativ aufwändig und kann mittels Verschweißung oder Verschraubung erfolgen. Bei der Verschweißung entsteht Hitze, die wiederum die Magnetstärke erheblich schwächt. Die Verschraubung zieht andererseits Verschmutzungen an. Das Sackloch ist demgegenüber so dimensioniert werden, dass es den Magneten ohne weitere Befestigungsmittel sicher hält. Allerdings kann das Sackloch auch einen überstehenden Rand oder eine an der Innenseite des Sacklochs angeordnete, mit einer Kerbe des Magneten zusammenwirkende Ausbuchtung aufweisen, wodurch der Magnet arretiert und am Herausfallen gehindert wird. Im Hinblick auf die aus dem Stand der Technik bekannten Verschraubungen schafft diese vorteilhafte Weiterbildung des erfindungsgemäßen Greifarms Abhilfe. Da in den in Rede stehenden Vorrichtungen immer ein Paar der erfindungsgemäßen Greifarme eingesetzt wird, sei der guten Ordnung halber darauf hingewiesen, dass - wie aus dem Stand der Technik hinlänglich bekannt - die sich gegenüberliegenden Pole der Magnete gleich gepolt sein müssen, damit sich die beiden Magnete zum Öffnen des Greifarmpaares auch abstoßen.

Vorzugsweise ist der Magnet mit einer Kunststoffschicht ummantelt. Durch das Einhüllen des Magneten in eine Kunststoffhülle wird der Abrieb und/oder die Korrosion des Magneten erheblich reduziert bzw. sogar vermieden und jegliches restliche Abriebmaterial wird in der Kunststoffhülle aufgefangen. Dadurch trägt diese Weiterbildung der Erfindung in hohem Maße zur Reinheit der Gesamtvorrichtung bei. Außerdem wird der Magnet vor äußeren Schlägen geschützt, die die Magnetkraft beeinträchtigen können.

Des Weiteren kann der Greifarm vorteilhafter Weise einstückig aus Kunststoff gefertigt sein. Herkömmliche Greifarme bestehen aus Edelstahl und sind deshalb relativ teuer, wobei sich darüber hinaus im Betrieb der in Rede stehenden Vorrichtungen gezeigt hat, dass sich die metallischen Greifarme gelegentlich verbiegen, was zum einen beim Betrieb der Vorrichtung schwer erkennbar ist und zum anderen zu Beschädigungen der zu greifenden und transportierenden Behälter und/oder der gegenüberliegenden Greifarme, welche den Behälter übergeben bzw. übernehmen, und/oder anderer Armaturen führen kann. Werden die Greifarme hingegen aus Kunststoff gefertigt, lassen sie sich sehr günstig als Wegwerfartikel im Spritzgussverfahren herstellen. Des Weiteren weist Kunststoff für diesen Einsatz bessere Eigenschaften gegenüber Edelstahl auf, so dass eine Überbeanspruchung des Greifarms nicht zum Verbiegen, sondern zum sofortigen Bruch führt, was keine Folgebeschädigung der Flasche nach sich zieht und ein sofortiges Erkennen des überbeanspruchten Greifarms ermöglicht. Dann kann der Greifarm aufgrund seiner einstückigen Ausbildung sehr rasch und kostengünstig ersetzt werden.

Als vorteilhafter Kunststoff hat sich faserverstärktes Polyetheretherketon (PEEK) erwiesen, da es eine gute Steifigkeit bei gleichzeitiger ausreichender Biegsamkeit aufweist. PEEK ist ein hochtemperaturbeständiger thermoplastischer Kunststoff und die Faserverstärkung ermöglicht einen Faser-Kunststoff-Verbund aus hoher spezifischer Steifigkeit und Festigkeit. Kunststoff zeigt im Gegensatz zu herkömmlich verwendetem Metall bzw. Edelstahl kaum Verschleißerscheinungen bei der Reinigung mit Wasser. Durch einen aus Kunststoff geformten Greifarm entsteht ein leicht austauschbares Produkt, dass nach seiner Abnutzung ohne Probleme entfernt und ohne große Kosten oder Lieferzeiten ersetzt werden kann.

Es hat sich des Weiteren als vorteilhaft herausgestellt, wenn der Greifabschnitt ein sich von der Unterseite zur Oberseite des Greifarms verjüngendes und/oder stufenförmiges Profil aufweist. Dadurch ist ein besseres und sichereres Greifen des flaschenartigen Behälters an einem Flaschenhals, insbesondere unterhalb sowie oberhalb eines Neckrings oder Flaschenhalskragens, möglich.

Die Erfindung betrifft ebenfalls ein erfindungsgemäßes Verfahren zum Herstellen eines zuvor genannten Greifarms, bei dem im Endabschnitt des Greifarmkörpers eine im Wesentlichen in Längsrichtung des Greifarms verlaufende Ausnehmung ausgebildet wird, deren Materialbegrenzung auf ihrer dem Steuernocken zugewandten Seite einen Federsteg bildet, dessen Materialstärke und Materialeigenschaft ein Abfedern und Ausgleichen der durch den Steuernocken auf den Greifarm ausgeübten Kraft und/oder Auslenkung ermöglicht, während die Querausdehnung der durch den Federsteg begrenzten Ausnehmung dem Federsteg Raum für den erforderlichen Federweg bietet.

Die Vorteile dieses erfindungsgemäßen Verfahrens ergeben sich im Wesentlichen aus den vorstehenden Erläuterungen zum erfindungsgemäßen Greifarm. Zusammenfassend ist hervorzuheben, dass das erfindungsgemäße Verfahren die Herstellung eines Greifarms ermöglicht, der ohne eine herkömmliche Blattfeder als separates Bauteil auskommt und damit in der Lage ist, wesentlich höheren Anforderungen an die Wartungsfreiheit und Reinheit einer Vorrichtung zum Greifen, Halten und Führen von insbesondere flaschenartigen Behältern, in welcher ein derartiger Greifarm eingesetzt wird, zu erfüllen.

In vorteilhafter Weiterbildung des erfindungsgemäßen Verfahrens ist vorgesehen, dass der Greifarm einstückig in einem Spritzgussverfahren aus Kunststoff hergestellt wird, wobei in einem Vorderabschnitt zwischen der Bohrung und dem Greifabschnitt als Aufnahme des Magneten ein Sackloch ausgebildet wird, in welches der Magnet zur Fertigstellung des Greifarms eingesetzt wird. Die Vorteile dieser Weiterbildung des erfindungsgemäßen Verfahrens bestehen insbesondere darin, dass eine sichere und gegen Verschmutzungen und/oder Korrosionen abgeschirmte Halterung für den Magneten erzeugt wird, die ohne zusätzliche Bauteile auskommt und daher günstig in der Herstellung und wartungsfrei ist. Bereits die Verwendung von Kunststoff als Herstellungsmaterial für die Greifarme hat den Vorteil, dass Verschleißerscheinungen und Verschmutzungen im Vergleich zu aus Metall geformten Greifarmen reduziert werden. Um die Greifarme zu reinigen, kann wegen des verwendeten Kunststoffs Wasser, aber auch aggressive Reinigungsmittel verwendet werden. Zusätzlich können die Herstellungskosten des Greifarms drastisch reduziert werden, wenn er aus einem Stück gefertigt wird. Es ist lediglich eine Schablone bzw. Spritzgussmaske notwendig, um einen komplette Greifarm herzustellen. Keine weiteren Teile, bis auf das in die Aufnahme einzusetzende bzw. montierbare Öffnungsmittel, müssen eingebaut, eingesetzt oder aufmontiert werden, damit die Greifvorrichtung mit den erfindungsgemäßen Greifarmen funktionsfähig ist.

Vorteilhafterweise wird nach einem zuvor genannten Verfahren zum Herstellen eines Greifarms der Magnet in das Sackloch eingepresst bzw. eingepasst. Die Vorteile dieser Weiterbildung des erfindungsgemäßen Verfahrens bestehen insbesondere darin, dass eine besonders sichere, formschlüssige Halterung für den Magneten geschaffen wird, die im Spritzgussverfahren mit geringem Materialausschuss herstellbar ist.

Im Folgenden werden alternative Ausführungsbeispiele des Greifarms und der Greifvorrichtung erläutert, die zu den zuvor genannten Ausführungsformen im Wesentlichen in der Positionierung und Art des Öffnungsmittels abweichen.

In einem weiteren Ausführungsbeispiel sind in einer Greifvorrichtung vorzugsweise wenigstens ein Magnet des einen Greifarms und wenigstens ein Magnet des korrespondierend angeordneten Greifarms im Endteil der Greifarme positioniert und derart gepolt, dass sie sich anziehen. Der Vorteil bei dieser Anordnung liegt darin, dass der Vorderabschnitt keine Aufnahme für ein Öffnungsmittel aufweist und somit kürzer geformt werden kann. Auf Grund der Kürze des Vorderabschnitts ist der Hebelarm zwischen Vorderabschnitt und einer Schwenkachse des Greifarms kürzer, wodurch der Vorderabschnitt belastbarer wird und schwerere Behälter halten kann.

Alternativ zur Verwendung von zwei Magneten kann einer der Greifarme wenigstens einen Magneten und der andere, korrespondierend angeordnete Greifarm wenigstens ein magnetisierbares Element aufweisen. Dabei sind der wenigstens eine Magnet des einen Greifarms und das wenigstens eine magnetisierbare Element des anderen Greifarms im Endabschnitt der Greifarme angeordnet und ziehen sich an. In diesem Fall muss zusätzlich nicht auf die Orientierung der Magneten bei deren Einsetzen in die Greifarme geachtet werden, da das magnetisierbare Element bekanntlich automatisch die entgegengesetzte magnetische Polung des Magneten annimmt. Insgesamt werden durch dieses alternative Ausführungsbeispiel der erfindungsgemäßen Greifarme die Herstellungskosten nochmals gesenkt. Außerdem kann nur noch ein Magnet durch äußere Einwirkungen wie z.B. Schläge beschädigt werden, weshalb die so gestaltete Greifvorrichtung wartungs- und reparaturfreundlicher wird.

Als weiteres Öffnungsmittel kann allein oder zusätzlich eine Feder im Endabschnitt und/oder im Vorderabschnitt zwischen den Greifarmen eingebaut werden, die den Steuernocken nicht in seiner Funktion behindert.

Um des Weiteren die Zugänglichkeit des Greifarms beim Reinigen zu verbessern, ist mindestens ein Teil einer Oberseite und/oder einer Unterseite des Greifarms schräg ausgebildet. Flächen und Bereiche des Greifarms, die durch Gehäuseelemente oder Befestigungselemente teilweise abgedeckt werden, wenn der Greifarm in einer Greifvorrichtung installiert ist, können auf Grund ihrer abgeschrägten Oberfläche leichter erreicht und mit Wasser und/oder durch Luftstrahler gereinigt werden.

Anhand der folgenden Zeichnungen werden ein erfindungsgemäßer Greifarm und eine Greifvorrichtung aus zwei Greifarmen erläutert. Es zeigen
- Fig. 1: eine perspektivische Ansicht eines erfindungsgemäßen Greifarmes einer erfindungsgemäßen Greifvorrichtung;
- Fig. 2: eine abstrahierte Draufsicht auf die erfindungsgemäße Greifvorrichtung in der Offenstellung; und
- Fig. 3: eine abstrahierte Draufsicht auf die erfindungsgemäße Greifvorrichtung in der Verschlussstellung.

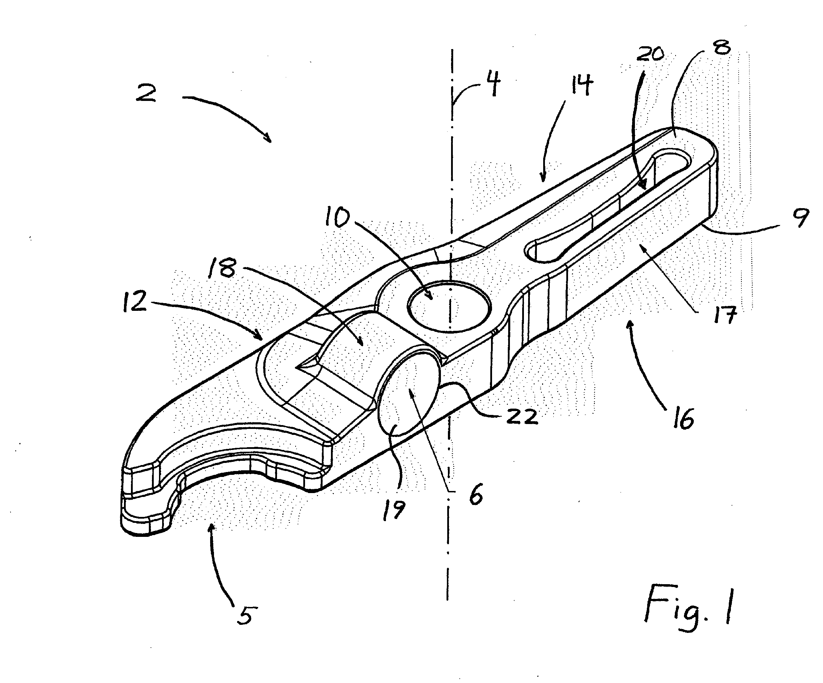

In der perspektivischen Ansicht von Fig. 1 wird ein erfindungsgemäßer Greifarm 2 dargestellt.

Der Greifarm 2 ist vorzugsweise länglich geformt und ist in einen Vorderabschnitt 12 und einen Endabschnitt 14 unterteilt. Der Greifarm 2 ist für eine Vorrichtung zum Greifen, Halten und Führen von insbesondere flaschenartigen Behältern vorgesehen, welche zum Bewegen eines Greifabschnitts 5 des Greifarms 2 von einer Öffnungsstellung in eine Greifstellung einen - hier nicht dargestellten - drehbar gelagerten Steuernocken aufweist. Zwischen den beiden Abschnitten 12 und 14 ist eine Bohrung 10 zur Lagerung eines - hier nicht dargestellten - Lagerbolzens zum schwenkbaren Befestigen des Greifarms 2 in der Vorrichtung angeordnet bzw. liegt auf der Grenze zwischen beiden Abschnitten. Im Vorderabschnitt 12 ist eine Aufnahme 18 für ein Öffnungsmittel 6 zum Bewegen des Greifabschnitts 5 des Greifarms 2 von der Greifstellung in die Öffnungsstellung ausgebildet. Durch das Zusammenwirken des Greifabschnitts 5 mit einem Greifabschnitt eines - hier nicht dargestellten - korrespondierenden zweiten Greifarms wird der Greifvorrichtung das Greifen und Halten eines Behälters ermöglicht. Vorzugsweise, aber nicht ausschließlich, handelt es sich bei dem Behälter um eine Flasche aus PET-Kunststoff (Polyethylenterephthalat) oder Glas und das Greifen und das Halten des Behälters erfolgt an einem Flaschenhals oder unterhalb eines Flaschenkragens. Es ist aber durchaus auch realisierbar, nicht flaschenartige Behälter beispielsweise am Bauch des Behälters zu greifen. Im Endabschnitt 14 ist ein Federungsmittel 16 zum Abfedern und Ausgleichen der durch den Steuernocken auf den Greifarm 2 ausgeübten Kraft und/oder Auslenkung ausgebildet. Dabei weist das Federungsmittel 16 einen integral in einem Endabschnitt 14 des Greifarmkörpers gebildeten Federsteg 17 auf. Der Federsteg 17 selbst ist die dem Steuernocken zugewandte Materialbegrenzung einer im Wesentlichen parallel zum Federsteg 17 in dem Endabschnitt 14 des Greifarmkörpers ausgebildeten Ausnehmung 20, welche dem Federsteg 17 Raum für den erforderlichen Federweg bietet.

In dem dargestellten Ausführungsbeispiel ist das Öffnungsmittel 6 ein Magnet 19, der in eine als Sackloch 22 ausgebildeten und zwischen der Bohrung 10 und dem Greifabschnitt 5 angeordneten Aufnahme 18 beim Zusammenbau des Greifarms 2 einsetzbar oder einpressbar ist. Der Magnet 19 ist zylinderförmig und mit einer Kunststoffschicht ummantelt. Der Greifarm 2 ist einstückig aus Kunststoff, vorzugsweise aus faserverstärktem Polyetheretherketon, gefertigt. Der Greifabschnitt 5 weist ein sich von einer Unterseite 9 zu einer Oberseite 8 des Greifarms 2 verjüngendes und stufenförmiges Profil auf. Die Bohrung 10 entspricht einer durchgehenden Bohrung von der Oberseite 8 zur Unterseite 9 des Greifarms 2, hat einen kreisförmigen Querschnitt und definiert eine Schwenkachse 4, die einer Symmetrieachse der Bohrung 10 entspricht. Dabei verläuft die Schwenkachse 4 senkrecht zur Oberseite 8 und zur Unterseite 9. Der Magnet 19 ist derart in dem Sackloch 22 eingesetzt, dass eine Grundfläche des Magneten 19 bündig zu einer auf den korrespondierenden zweiten Greifarm gerichteten Greifarmaußenseite angeordnet ist. Ein Durchmesser des Magneten 19 ist größer als die Dicke des Vorderabschnitts 12, weshalb der Magnet 19 über einen Hauptteil der Oberseite 8 hinausragt. Der Greifarm 2 ist abgesehen von dem Öffnungsmittel 6 einstückig in einem Spritzgussverfahren aus Kunststoff herstellbar.

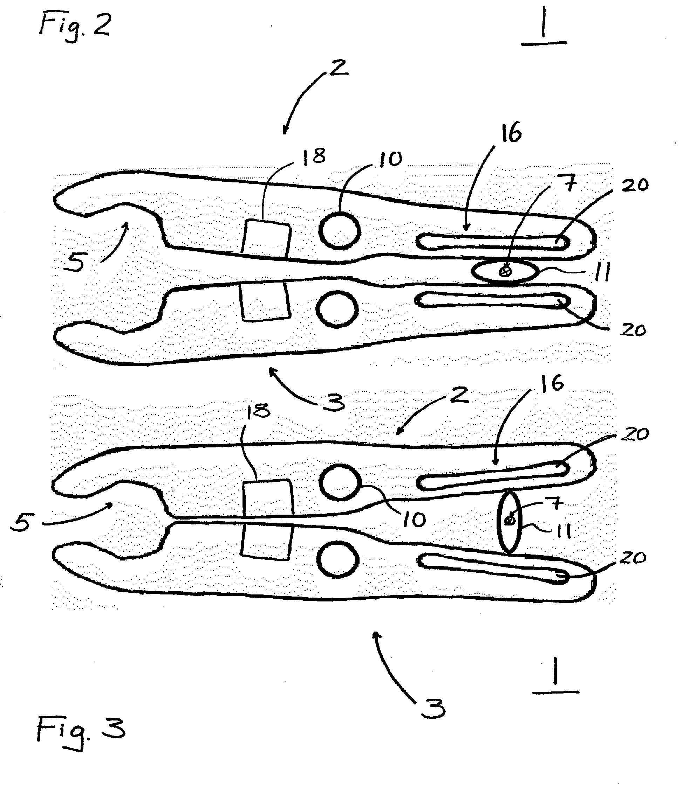

In Fig. 2 wird eine abstrahierte Draufsicht auf eine Greifvorrichtung 1 aus zwei erfindungsgemäßen Greifarmen 2 und 3 in einer Offenstellung gezeigt.

Neben dem in Figur 1 aufgezeigten Greifarm 2 weist die Vorrichtung 1 den zweiten, korrespondierenden Greifarm 3 auf. Die beiden Greifarme 2 und 3 sind spiegelsymmetrisch zueinander angeordnet und ausgebildet. Die Offenstellung der dargestellten Greifvorrichtung 1 ist dadurch charakterisiert, dass zwischen die Greifabschnitte 5 im Vorderabschnitt 12 der Greifarme 2 und 3 ein Behälter, vorzugsweise von einer Vorderseite der Greifvorrichtung 1, geführt werden kann. Des Weiteren weist die Vorrichtung 1 einen Steuernocken 11 auf, der zwischen den Federungsmitteln 16 der beiden Greifarme 2 und 3 angeordnet ist. Der Steuernocken 11 ist um 360 Grad, vorzugsweise um ca. 200 Grad, um eine Steuerachse 7, die vorzugsweise seiner Symmetrieachse entspricht, drehbar. Dabei liegt die Steuernocke 7 an einem Anschlag (nicht dargestellt) an. Dies hat den Vorteil, dass die Steuernocke 7 in einer Endlagenposition einrastet, die mittels einer definierten Öffnerkraft bzw. Schließkraft geändert werden kann und nicht aus eigener Kraft eine Änderung hervorruft. In der Offenstellung ist der Steuernocken 11 derart eingestellt, dass ein Abstand zwischen den Federungsmitteln 16 der beiden Greifarme 2 und 3 so klein wie möglich ist und vorzugsweise der Dicke des Steuernockens an seiner schmalsten Stelle entspricht.

In Fig. 3 wird eine abstrahierte Draufsicht auf die Greifvorrichtung 1 aus zwei erfindungsgemäßen Greifarmen 2 und 3 in einer Verschlussstellung gezeigt.

Die Greifvorrichtung 1 entspricht der Greifvorrichtung aus Fig. 2 und unterscheidet sich lediglich darin, dass der Steuernocken 11 um ungefähr 90 Grad um die Steuerachse 7 gedreht ist. Ein in der Verschlussstellung entstandener Abstand zwischen den Federungsmitteln 16 der beiden Greifarme 2 und 3 ist dadurch vergrößert und ein Abstand zwischen den Vorderabschnitten 12 verkleinert. Der Abstand zwischen den Federungsmitteln 16 entspricht vorzugsweise der Dicke des Steuernockens an seiner breitesten Stelle. Vorzugsweise wird das Federungsmittel 16 in dieser Stellung, auch wenn ein Behälter gehalten wird, nicht eingedrückt, um die Materialbeanspruchung des Federstegs 17 zu reduzieren. Wie zuvor beschrieben, hilft das Federungsmittel 16, ausnahmsweise vorkommende Materialtoleranzen von zu greifenden Behältern oder durch einen schief stehenden Behälter hervorgerufene Abweichungen der Greifweite auszugleichen.

### Bezugszeichen

- 1: Greifvorrichtung
- 2: Greifarm
- 3: Korrespondierender Greifarm
- 4: Schwenkachse des Greifarms
- 5: Greifabschnitt
- 6: Öffnungsmittel
- 7: Steuerachse
- 8: Oberseite
- 9: Unterseite
- 10: Bohrung
- 11: Steuernocken
- 12: Vorderabschnitt
- 14: Endabschnitt
- 16: Federungsmittel
- 17: Federsteg
- 18: Aufnahme für Öffnungsmittel
- 19: Magnet
- 20: Ausnehmung
- 22: Sackloch

## Patentansprüche

1. Greifarm (2) für eine Vorrichtung zum Greifen, Halten und Führen von insbesondere flaschenartigen Behältern, welche zum Bewegen eines Greifabschnitts (5) des Greifarms (2) von einer Öffnungsstellung in eine Greifstellung einen drehbar gelagerten Steuernocken (11) aufweist, mit einer Bohrung (10) zur Lagerung eines Lagerbolzens zum schwenkbaren Befestigen des Greifarms (2) in der Vorrichtung, mit einer Aufnahme (18) für ein Öffnungsmittel (6) zum Bewegen des Greifabschnitts (5) des Greifarms (2) von der Greifstellung in die Öffnungsstellung, und mit einem Federungsmittel (16) zum Abfedern und Ausgleichen der durch den Steuernocken (11) auf den Greifarm (2) ausgeübten Kraft und/oder Auslenkung,
**dadurch gekennzeichnet, dass**
das Federungsmittel (16) einen integral in einem Endabschnitt (14) des Greifarmkörpers gebildeten Federsteg (17) aufweist, wobei der Endabschnitt (14) eine Ausnehmung (20) als Federraum für den Federsteg (17) aufweist und eine Materialbegrenzung der Ausnehmung (20) auf ihrer dem Steuernocken zugewandten Seite den Federsteg (17) bildet, dessen Materialstärke und Materialeigenschaft ein Abfedern und Ausgleichen der durch den Steuernocken auf den Greifarm ausgeübten Kraft und/oder Auslenkung ermöglicht.

2. Greifarm (2) nach Anspruch 1, bei dem das Öffnungsmittel (6) zum Bewegen des Greifabschnitts (5) des Greifarms (2) von der Greifstellung in die Öffnungsstellung ein Magnet (19) ist,
**dadurch gekennzeichnet, dass**
der Greifarm (2) in einem Vorderabschnitt (12) zwischen der Bohrung (10) und dem Greifabschnitt (5) als Aufnahme (18) für den Magneten (19) ein Sackloch (22) aufweist, in welches der Magnet (19) beim Zusammenbau des Greifarms (2) einsetzbar ist.

3. Greifarm (2) nach Anspruch 2,
**dadurch gekennzeichnet, dass**
der Magnet (19) mit einer Kunststoffschicht ummantelt ist.

4. Greifarm (2) nach einem der Ansprüche 1 bis 3,
**dadurch gekennzeichnet, dass**
der Greifarm (2) einstückig aus Kunststoff gefertigt ist.

5. Greifarm nach Anspruch 4,
**dadurch gekennzeichnet, dass**
der Kunststoff aus faserverstärktem Polyetheretherketon besteht.

6. Greifarm (2) nach einem der Ansprüche 1 bis 5,
**dadurch gekennzeichnet, dass**
der Greifabschnitt (5) ein sich von der Unterseite (9) zur Oberseite (8) des Greifarms (2) verjüngendes und/oder stufenförmiges Profil aufweist.

7. Verfahren zum Herstellen eines Greifarms (2) nach einem der vorstehenden Ansprüche,
**dadurch gekennzeichnet, dass**
im Endabschnitt (14) des Greifarmkörpers eine im Wesentlichen in Längsrichtung des Greifarms (2) verlaufende Ausnehmung (20) ausgebildet wird, deren Materialbegrenzung auf ihrer dem Steuernocken (11) zugewandten Seite einen Federsteg (17) bildet, dessen Materialstärke und Materialeigenschaft ein Abfedern und Ausgleichen der durch den Steuernocken (11) auf den Greifarm (2) ausgeübten Kraft und/oder Auslenkung ermöglicht, während die Querausdehnung der durch den Federsteg (17) begrenzten Ausnehmung (20) dem Federsteg (17) Raum für den erforderlichen Federweg bietet.

8. Verfahren zum Herstellen eines Greifarms (2) nach einem der Ansprüche 1 bis 7,
**dadurch gekennzeichnet, dass**
der Greifarm (2) einstückig in einem Spritzgussverfahren aus Kunststoff hergestellt wird, wobei in einem Vorderabschnitt (12) zwischen der Bohrung (10) und dem Greifabschnitt (5) als Aufnahme (18) des Magneten (19) ein Sackloch (22) ausgebildet wird, in welches der Magnet (19) zur Fertigstellung des Greifarms (2) eingesetzt wird.

9. Verfahren zum Herstellen eines Greifarms (2) nach Anspruch 8,
**dadurch gekennzeichnet, dass**
der Magnet (19) in das Sackloch (22) eingepresst wird.

## Claims

1. A gripper arm (2) for a device for grasping, holding and guiding particularly bottle-like containers comprising a rotatably mounted control cam (11) for moving a gripping section (5) of the gripper arm (2) from an open position into a gripping position which has a bore hole (10) for supporting a bearing pin for pivotably fixing the gripper arm (2) in the device; a seating (18) for an opening means (6) for moving the gripping section (5) of the gripper arm (2) from the gripping position into the open position; and a spring means (16) for cushioning and equalizing the force and/or deflection exerted on the gripper arm (2) by the control cam (11),
**characterized in that**
the spring means (16) comprises a spring bar (17) integrally formed in an end section (14) of the gripper arm body, wherein the end section (14) has a recess (20) as spring space for the spring bar (17) and forms a material limitation of the recess (20) on its spring bar (17) side facing the control cam, the material strength and material properties of which enable a cushioning and equalizing of the force and/or deflection exerted by the control cam on the gripper arm.

2. The gripper arm (2) according to claim 1, in which the opening means (6) for moving the gripping section (5) of the gripper arm (2) from the gripping position into the open position is a magnet (19),
**characterized in that**
the gripper arm (2) comprises a blind hole (22) as the seating (18) for the magnet (19) in an anterior section (12) between the bore hole (10) and the gripping section (5) into which the magnet (19) can be inserted during assembly of the gripper arm (2).

3. The gripper arm (2) according to claim 2,
**characterized in that**
the magnet (19) is encased in a plastic layer.

4. The gripper arm (2) according to any one of claims 1 to 3,
**characterized in that**
the gripper arm (2) is manufactured from plastic as one piece.

5. The gripper arm (2) according to claim 4,
**characterized in that**
the plastic is fiber-reinforced polyetheretherketone.

6. The gripper arm (2) according to any one of claims 1 to 5,
**characterized in that**
the gripping section (5) exhibits a tapered and/or stepped profile from the underside (9) to the upper side (8) of the gripper arm (2).

7. A method for manufacturing a gripper arm (2) according to any one of the preceding claims,
**characterized in that**
a recess (20) extending substantially longitudinally in the gripper arm (2) is formed in the end section (14) of the gripper arm body, its material limitation forming a spring bar (17) on its side facing the control cam (11), the material strength and material properties of which enable a cushioning and equalizing of the force and/or deflection exerted by the control cam (11) on the gripper arm (2) while the lateral extension of the recess (20) limited by the spring bar (17) provides space for the necessary spring deflection of the spring bar (17).

8. The method for manufacturing a gripper arm (2) according to any one of claims 1 to 7,
**characterized in that**
the gripper arm (2) is injection molded from plastic as one piece, wherein a blind hole (22) is formed as the seating (18) of the magnet (19) in an anterior section (12) between the bore hole (10) and the gripping section (5) into which the magnet (19) is inserted to complete the gripper arm (2).

9. The method for manufacturing a gripper arm (2) according to claim 8,
**characterized in that**
the magnet (19) is pressed into the blind hole (22).

## Revendications

1. Bras de préhension (2) pour un dispositif destiné à saisir, maintenir et guider des récipients, en particulier semblables à des bouteilles, qui comprend une came de commande (11) montée rotative afin de déplacer un tronçon de préhension (5) du bras de préhension (2) depuis une position ouverte jusque dans une position de préhension, comportant un perçage (10) pour le montage d'un boulon formant palier destiné à la fixation pivotante du bras de préhension (2) dans le dispositif, comprenant un récepteur (18) pour un moyen d'ouverture (6) afin de déplacer le tronçon de préhension (5) du bras de préhension (2) depuis la position de préhension jusque dans la position ouverte, et comprenant un organe d'amortissement (16) pour amortir et pour compenser la force et/ou la déviation appliquée au bras de préhension (2) par la came de commande (11), **caractérisé en ce que**
l'organe d'amortissement (16) comprend une barrette-ressort (17) formée intégralement dans un tronçon terminal (14) du corps du bras de préhension, dans lequel le tronçon terminal (14) comporte un évidement (20) à titre de chambre de débattement pour la barrette-ressort (17) et une délimitation matérielle de l'évidement (20) forme la barrette-ressort (17) sur son côté détourné de la came de commande, l'épaisseur du matériau et les propriétés du matériau de ladite barrette permettant un amortissement et une compensation de la force et/ou de la déviation exercée par la came de commande sur le bras de préhension.

2. Bras de préhension (2) selon la revendication 1, dans lequel l'organe d'ouverture (6) destiné à déplacer le tronçon de préhension (5) du bras de préhension (2) depuis la position de préhension jusque dans la position d'ouverture est un aimant (19), **caractérisé en ce que** le bras de préhension (2) comporte, dans un tronçon antérieur (12) entre le perçage (10) et le tronçon de préhension (5), un trou borgne (22) à titre de récepteur (18) pour l'aimant (19), dans lequel l'aimant (19) peut être mis en place lors de l'assemblage du bras de préhension (2).

3. Bras de préhension (2) selon la revendication 2,
**caractérisé en ce que** l'aimant (19) est enveloppé d'une couche de matière plastique.

4. Bras de préhension (2) selon l'une des revendications 1 à 3, **caractérisé en ce que** le bras de préhension (2) est fabriqué d'une seule pièce en matière plastique.

5. Bras de préhension selon la revendication 4,
**caractérisé en ce que** la matière plastique est une polyétheréthercétone renforcée par des fibres.

6. Bras de préhension selon l'une des revendications 1 à 5,
**caractérisé en ce que**
le tronçon de préhension (5) présente un profil qui va en se rétrécissant depuis la face inférieure (9) jusqu'à la face supérieure (8) du bras de préhension (2) et/ou un profil en forme de gradins.

7. Procédé pour fabriquer un bras de préhension (2) selon l'une des revendications précédentes,
**caractérisé en ce que**
dans le tronçon terminal (14) du corps du bras de préhension, on forme un évidement (20) qui s'étend sensiblement en direction longitudinale du bras de préhension (2), évidement dont la délimitation matérielle forme une barrette-ressort (17) sur son côté tourné vers la came de commande (11), telle que l'épaisseur et les propriétés du matériau de ladite barrette permettent un amortissement et une compensation de la force et/ou de la déviation exercée par la came de commande (11) sur le bras de
préhension (2), alors que l'extension transversale de l'évidement (20) délimité par la barrette-ressort (17) offre à la barrette-ressort (17) de l'espace pour la course de débattement nécessaire.

8. Procédé pour fabriquer un bras de préhension (2) selon l'une des revendications 1 à 7,
**caractérisé en ce que**
le bras de préhension (2) est fabriqué d'une seule pièce en matière plastique dans une procédure de moulage par injection, dans laquelle on réalise dans un tronçon antérieur (12) entre le perçage (10) et le tronçon de préhension (5) un trou borgne (2) à titre de récepteur (18) pour l'aimant (19), dans lequel l'aimant (19) est mis en place pour la finition du bras de préhension (2).

9. Procédé pour fabriquer un bras de préhension (2) selon la revendication 8, **caractérisé en ce que** l'élément (19) est enfoncé à la presse dans le trou borgne (22).
